(19) Europäisches Patentamt / European Patent Office / Office européen des brevets

(11) **EP 2 171 913 B1**

(12) **FASCICULE DE BREVET EUROPEEN**

(45) Date de publication et mention
de la délivrance du brevet:
**16.10.2013 Bulletin 2013/42**

(21) Numéro de dépôt: **08805979.5**

(22) Date de dépôt: **12.06.2008**

(51) Int Cl.:
*H04L 9/32* (2006.01)    *G07C 9/00* (2006.01)

(86) Numéro de dépôt international:
**PCT/FR2008/051044**

(87) Numéro de publication internationale:
**WO 2009/004215 (08.01.2009 Gazette 2009/02)**

(54) **TRAITEMENT DE DONNEES BIOMETRIQUES PAR TRANSFORMATION**

VERARBEITUNG BIOMETRISCHER DATEN DURCH TRANSFORMATION

PROCESSING OF BIOMETRIC DATA BY TRANSFORMATION

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **12.06.2007 FR 0704170**

(43) Date de publication de la demande:
**07.04.2010 Bulletin 2010/14**

(73) Titulaire: **MORPHO
92130 Issy Les Moulineaux (FR)**

(72) Inventeurs:
• **CHABANNE, Hervé
F-75015 Paris (FR)**
• **BRINGER, Julien
F-75015 Paris (FR)**

(74) Mandataire: **Cabinet Plasseraud
52, rue de la Victoire
75440 Paris Cedex 09 (FR)**

(56) Documents cités:
**EP-A- 1 274 040      WO-A-2007/029529
FR-A- 2 871 910      US-A- 6 038 315
US-B1- 6 836 554**

• **JUELS A ET AL: "A fuzzy commitment scheme"
6TH. ACM CONFERENCE ON COMPUTER AND
COMMUNICATIONS SECURITY. SINGAPORE,
NOV. 2 - 4, 1999, ACM CONFERENCE ON
COMPUTER AND COMMUNICATIONS
SECURITY, NEW YORK, NY : ACM, US, 2
novembre 1999 (1999-11-02), pages 28-36,
XP002285060 ISBN: 1-58113-148-8 cité dans la
demande**

**Description**

La présente invention concerne le traitement de données biométriques, et plus particulièrement la reconnaissance de données biométriques sur la base d'une comparaison de données biométriques transformées.

Certains systèmes de contrôle d'accès se fondent sur une analyse de caractéristiques biométriques d'une personne pour déterminer par exemple si cette dernière est autorisée à accéder à un lieu protégé. Une telle analyse de caractéristiques biométriques est également utilisée dans certains systèmes d'authentification ou d'identification qui visent à authentifier ou identifier une personne. Cette analyse est classiquement basée sur une comparaison de données biométriques captées sur une personne en cours de contrôle, avec des données stockées dans une base de données.

Ainsi, par exemple, dans le cas des systèmes de contrôle d'accès, des données biométriques correspondant aux personnes pour lesquelles un accès est autorisé sont stockées dans une base de données. A l'issue d'une étape de comparaison de données captées sur une personne en cours de contrôle avec des données stockées, le système est en mesure de déterminer si cette personne fait partie de celles pour lesquelles un accès est autorisé.

Les données biométriques revêtent un caractère confidentiel très important. Par conséquent, il convient de veiller à les manipuler en protégeant leur confidentialité, notamment dans un souci de protection de vie privée

A cet effet, dans le document US 6 836 554, il est prévu de transformer de telles données biométriques en leur appliquant une fonction de transformation irréversible. Dans ces conditions, il est alors possible de manipuler ces données biométriques sous une forme transformée qui ne permet pas de récupérer les données biométriques initiales. En effet, l'étape consistant à comparer des données biométriques stockées et des données biométriques relatives à une personne en cours de contrôle est alors effectuée sur la base de données biométriques ainsi transformées.

En procédant ainsi, même si un tiers mal intentionné intercepte ces données biométriques transformées, il n'est pas en mesure d'en déduire les données biométriques initiales correspondantes car la fonction de transformation qui a été utilisée n'est pas réversible.

Dans ce contexte, le niveau de protection de la confidentialité de ces données biométriques est d'autant plus élevé que la déformation de ces données biométriques induites par l'application d'une telle fonction de transformation f est importante.

Toutefois, il convient de noter que la comparaison des données biométriques transformées est réalisée dans ce contexte sur l'ensemble de la représentation spatiale de ces données biométriques. Par conséquent, une telle comparaison peut fournir des résultats erronés dans le cas où les déformations spatiales induites par l'application de la fonction de transformation f sont trop importantes. En effet, dans le cas par exemple de données biométriques relatives à un visage, les algorithmes visant à déterminer si deux images déformées de visage correspondent au même visage peuvent indiquer qu'il s'agit de deux visages différents, simplement parce que ces deux images de visage ont subi des déformations trop importantes pour ces algorithmes de comparaison.

Or, dans ce type de système biométrique, cette étape de comparaison est une étape capitale sur laquelle repose la fiabilité d'un système biométrique.

En outre, une comparaison de données biométriques avec l'utilisation d'un mot de code correcteur d'erreurs est mentionnée dans le document WO 2007/029529 A1.

La présente invention vise à améliorer la situation.

Un premier aspect de la présente invention propose un procédé de traitement de données biométriques relatives à une partie biologique selon la revendication 1.

Grâce à ces dispositions, il est possible de manipuler des données biométriques ayant subies d'importantes déformations, tout en mettant en oeuvre une étape de comparaison fournissant des résultats pertinents. On peut ainsi obtenir un niveau de protection de la confidentialité des données biométriques manipulées élevé tout en fournissant un système de reconnaissance de données biométriques très fiable. En effet, d'une part, les données biométriques manipulées sont transformées de manière irréversible, et, d'autre part, elles sont manipulées pour être comparées au niveau du bit dans leur représentation numérique, ce qui permet d'obtenir des résultats pertinents de comparaison.

En outre, on peut également noter qu'en procédant ainsi, les résultats d'une telle étape de comparaison peuvent être d'autant meilleurs que la transformation f appliquée aux données biométriques considérées est importante, contrairement à l'enseignement fourni dans le document US 6,836,554. En effet, selon ce dernier document, la comparaison entre deux images relatives à des données biométriques est effectuée de manière globale dans l'espace selon des représentations spatiales des données biométriques à comparer. De ce fait, cette comparaison ne peut pas fournir de résultat pertinent dans le cas d'une déformation importante. Or, d'un autre côté, il convient de noter que plus les déformations sont importantes et plus le niveau de confidentialité des données est élevé. Par conséquent, dans le contexte de l'enseignement du document US 6,836,554, le niveau de confidentialité que l'on peut atteindre est restreint.

Dans un mode de réalisation de la présente invention, la comparaison des données biométriques transformées est effectuée au niveau bit dans une représentation numérique des données biométriques, et de ce fait elle tolère d'importantes déformations des données. En outre, non seulement cette comparaison permet de fournir des résultats pertinents même en cas de grandes déformations mais elle est même d'autant plus pertinente que les déformations sont importantes.

Grâce à ces caractéristiques, on est en mesure d'obtenir un niveau de confidentialité des données biométriques beaucoup plus élevés que dans l'art antérieur, tout en maintenant un niveau de performance élevé également à l'étape de comparaison.

La transformation peut être révocable, c'est-à-dire qu'en cas de compromission de la confidentialité des données biométriques, on peut générer une autre transformation différente de celle précédemment utilisée pour transformer les données biométriques, et appliquer cette autre transformation aux données biométriques considérées au cours de ce traitement pour obtenir à nouveau un niveau de protection élevé de la confidentialité des données biométriques manipulées.

Le premier ensemble de données biométriques peut être avantageusement capturé au cours d'une phase d'enrôlement, classiquement mise en oeuvre dans des systèmes de biométrie. Puis, ce premier ensemble de données biométriques est transformé par application d'au moins une transformation irréversible. Les données biométriques peuvent être stockées dans la base de données sous leur forme ainsi transformée pour protéger leur confidentialité.

Dans un mode de réalisation de la présente invention, on obtient le premier ensemble de données biométriques transformées sous une forme codée en appliquant une opération de 'ou exclusif' entre le premier ensemble de données biométriques transformées et le mot de code correcteur d'erreurs et, à l'étape /c/ on réalise les étapes suivantes:

/1/ appliquer une opération de 'ou exclusif' entre le second ensemble de données biométriques transformées et le premier ensemble de données biométriques transformées sous une forme codée ; et

/2/ décider que le second ensemble de données biométriques correspond au premier ensemble de données biométriques si le résultat obtenu à l'issue de l'étape /1/ est égal au résultat de l'opération de 'ou exclusif' appliquée entre le mot de code correcteur d'erreurs et une erreur lorsqu'un algorithme de décodage associé audit mot de code correcteur d'erreurs est adapté pour déterminer ladite erreur.

Ainsi, lorsqu'un algorithme de décodage associé au mode de code d'erreur est en mesure de déterminer l'erreur, on en déduit que les données biométriques transformées des premier et second ensembles se correspondent. A cet effet, on peut décider que le second ensemble de données biométriques correspond au premier ensemble de données biométriques lorsque l'erreur présente un poids inférieur à la capacité de correction du mot de code correcteur d'erreurs.

Le mot de code correcteur d'erreurs peut être stocké dans une base de données sous une forme hachée obtenue par application d'une fonction de hachage audit mot de code correcteur d'erreurs.

Après avoir effectué un algorithme de décodage associé au mot de code d'erreur, l'erreur peut être déterminée. Puis, on est alors en mesure de retirer l'erreur ainsi déterminée, de vérifier le mot de code correcteur d'erreurs sous une forme hachée.

Avant l'étape /a/, on peut prévoir une phase d'enrôlement au cours de laquelle, d'une part, le premier ensemble de données biométriques est capturé, et, d'autre part, le mot de code correcteur d'erreurs est généré de manière aléatoire.

Ainsi, le premier ensemble de données biométriques transformées peut être stocké dans une base de données sous une forme codée obtenue en appliquant une opération de 'ou exclusif' entre le premier ensemble de données biométriques transformées et le mot de code correcteur d'erreurs.

Dans le contexte de la présente invention, il convient d'entendre les termes 'transformation irréversible' dans leur sens le plus général, c'est à dire qu'à partir des données biométriques transformées obtenues par application d'une telle transformation, il n'est pas possible de récupérer les données biométriques initiales.

Ainsi, on peut prévoir que la transformation est irréversible parce qu'elle présente intrinsèquement des caractéristiques d'irréversibilité, ou encore, tout simplement parce qu'elle est conservée secrète.

Selon l'invention, les premier et second ensembles de données biométriques correspondent à des données biométriques extraites à partir de données biométriques transformées obtenues par application d'une autre transformation irréversible sur des données biométriques captées sur la partie biologique.

Un deuxième aspect de la présente invention propose un système de traitement de données biométriques adapté pour mettre en oeuvre un procédé de traitement de données biométriques selon le premier aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre les principales étapes réalisées selon un mode de réalisation de la présente invention ; et
- la figure 2 illustre un système de traitement de données biométriques selon un mode de réalisation de la présente invention.

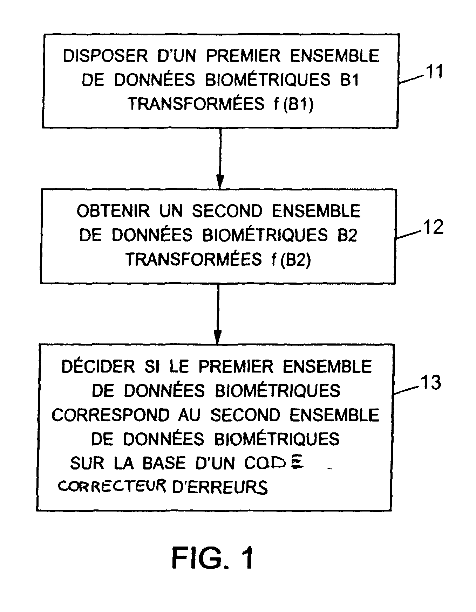

La figure 1 illustre les principales étapes d'un mode de réalisation de la présente invention.

Des données biométriques de référence sont stockées, par exemple, dans une base de données pour servir de référence à l'étape de comparaison et décider si les données biométriques en cours de contrôle correspondent à ces données biométriques de référence ou non.

Afin d'augmenter le niveau de protection de la confidentialité des données biométriques, on prévoit que ces données biométriques de référence sont stockées sous une forme transformée qui ne permette pas de récupérer les données biométriques de référence initiales. Ainsi, on peut capter des données biométriques relatives à une partie biologique d'une personne en tant que premier ensemble de données biométriques de référence. Puis, on applique alors une fonction de transformation f non réversible à ce premier ensemble de données biométriques de référence pour obtenir un premier ensemble de données biométriques transformées qui est stocké dans une base de données accessible par une unité de décision en charge de décider si des données biométriques captées correspondent aux données biométriques de référence.

On prévoit donc ici de manipuler des données biométriques de référence sous une forme transformée.

A une étape 11, on dispose du premier ensemble de données biométriques transformées, par exemple via l'accès à une base de données.

A une étape 12, on obtient un second ensemble de données biométriques transformées. A cet effet, on peut prévoir de capter un second ensemble de données biométriques, puis d'y appliquer une transformation f pour obtenir ce second ensemble de données biométriques transformées.

Selon la présente invention, l'étape de capture des données biométriques de référence comprend une extraction de données biométriques plus spécifiques à partir des données biométriques captées. Ainsi, par exemple, lorsque les données biométriques considérées correspondent à des empreintes, on peut prévoir d'en extraire des données relatives aux minuties.

Lors de cette étape de capture comprenant une telle extraction, on prévoit d'appliquer la transformation avant cette extraction, c'est-à-dire sur les données biométriques captées, et après cette extraction, c'est-à-dire dans le cas des empreintes par exemple, sur les données relatives aux minuties. Il convient de noter que la protection de la confidentialité des données est ainsi augmentée.

Il convient de noter que dans le contexte de la présente invention, le terme 'transformation' désigne une fonction non réversible qui permet de transformer des données biométriques.

La transformation peut notamment correspondre à une déformation spatiale appliquée dans un référentiel de l'image biométrique captée. On peut utiliser des techniques de déformation d'images connues, ou techniques de 'morphing' en anglais. Une telle transformation peut être de type géométrique ou spatiale. De telles transformations sont décrites dans le document Thaddeus Beier and Shawn Neely, Feature-based image metamorphosis, SIGGRAPH '92: Proceedings of the 19th annual conference on Computer graphics and interactive techniques.

On peut utiliser des transformations f qui sont basées sur une transformation de coordonnées, comme celles qui sont décrites dans le document US 6 836 554. Ainsi, par exemple, une telle transformation f peut correspondre à une découpe d'une image dans deux dimensions relatives aux données biométriques en une pluralité de parties, puis une déformation spatiale dans chaque partie d'image de la pluralité de parties. On peut ici prévoir d'appliquer des transformations plus importantes aux données biométriques.

On peut également prévoir d'utiliser une transformation basée sur une symétrie axiale, comme cela est décrit dans le document Russell Ang and Reihaneh Safavi-Naini and Luke McAven, Cancelable Key-Based Fingerprint Templates. ACISP 2005.

On peut également déformer les données biométriques considérées, c'est-à-dire celle du premier et du second ensemble de données, par application d'une transformation dans une représentation numérique des données biométriques, comme par exemple par application d'une transformation polynomiale.

Puis, à une étape 13, on compare les premier et second ensembles de données biométriques de sorte à déterminer s'ils correspondent aux mêmes données biométriques initiales. Avantageusement, il est ici prévu d'effectuer cette comparaison au niveau bit des données biométriques considérées, sur la base d'un mot de code correcteur d'erreurs.

Le document 'A Fuzzy Commitment Scheme' de Juels et Wattenberg, 1999, propose une telle comparaison sous la forme d'un problème classique de décodage avec l'utilisation d'un mot de code correcteur d'erreurs.

Ici, dans un mode de réalisation, il est prévu d'appliquer un mot de code correcteur d'erreurs dans le contexte des premier et second ensembles de données biométriques transformées.

Ainsi, pour effectuer l'étape de comparaison de données biométriques, on réalise une opération de 'ou exclusif' entre le premier ensemble données biométriques transformées f (B1) et un mot d'un mot de code correcteur d'erreurs c. On obtient alors des données biométriques transformées et codées $\delta$ selon l'équation suivante :

$$\delta = f(B1) \oplus c$$

Puis, pour comparer les données biométriques captées B2 avec les données biométriques de référence B1, on détermine si l'opération suivante est vérifiée :

$$\delta \oplus f(B2) = c \oplus e$$

dans laquelle

f(B2) correspond au second ensemble de données biométriques transformées et

e est une erreur qui peut être déterminée par un algorithme de décodage associé audit mot de code correcteur d'erreurs.

Dans le cas où cette équation est vérifiée, on en déduit alors que le premier ensemble de données biométriques B1 stockées et le second ensemble de données biométriques captées B2 se correspondent.

En procédant ainsi, alors que l'on obtiendrait de mauvais résultats d'une comparaison effectuée de manière classique entre des ensembles de données biométriques transformées, ici, on est en mesure d'obtenir de bons résultats même pour des images relativement fortement déstructurées.

Un mode de réalisation de la présente invention est avantageusement applicable sur tout type de données biométriques relatives à une partie biologique tel que par exemple, les empreintes, l'iris ou encore le visage.

Il convient ici de noter que les résultats obtenus par application d'un mode de réalisation de la présente invention dans le contexte des empreintes digitales présentent une fiabilité élevée, contrairement à ceux qui sont obtenus par application d'une étape de comparaison classique, ou encore par application d'algorithme de 'matching' en anglais, sur des données biométriques relatives à des empreintes comme cela est décrit dans le document US 6 836 554. En effet, les algorithmes de comparaison se basent classiquement sur une structure liée à la partie biologique concernée et, lorsque cette structure peut être perdue même au cours d'une transformation légère, comme cela est le cas pour une empreinte, les résultats obtenus peuvent rapidement être erronés.

D'autre part, la protection sur les données biométriques originales est accrue puisque les sécurités assurées par la transformation et par le stockage sous forme codée s'additionnent.

Le premier ensemble de données biométriques de référence peut être obtenu au cours d'une phase d'enrôlement du procédé de traitement de données biométriques considéré.

Dans un mode de réalisation de la présente invention, le mot de code correcteur d'erreurs peut être généré de manière aléatoire au cours de cette phase d'enrôlement. On peut alors dans ces conditions stocker le premier ensemble de données biométriques transformées sous une forme codée avec le mot de code correcteur d'erreurs, en appliquant une opération de 'ou exclusif' entre ce premier ensemble de données biométriques et le mot de code correcteur d'erreurs. On dispose donc ici directement du premier ensemble de données biométriques transformées et codées pour effectuer l'étape de comparaison.

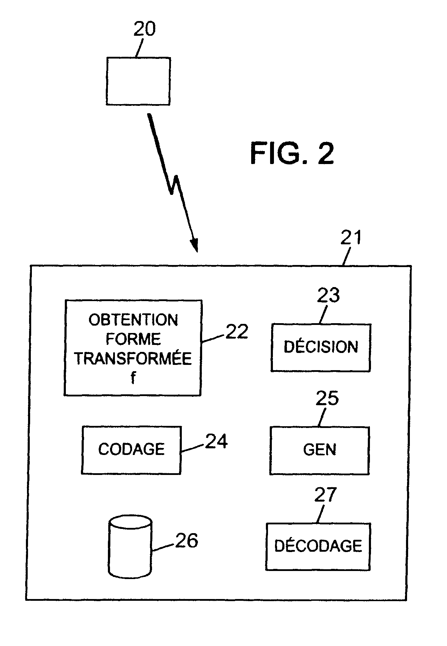

La figure 2 illustre un système de traitement de données biométriques comprenant un dispositif de traitement de données biométriques 21 et une pluralité de capteurs biométriques 20 adaptés pour fournir à ce dispositif 21 un second ensemble de données biométriques B2.

Ce dispositif de traitement 21 comprenant une unité d'obtention 22 adaptée pour obtenir un premier ensemble de données biométriques transformées f(B1) par application d'au moins une transformation f irréversible à un premier ensemble de données biométriques B1 et un second ensemble de données biométriques transformées f(B2) par application de la transformation à un second ensemble de données biométriques B2.

Ainsi, cette unité d'obtention 22 est adaptée pour appliquer une transformation f irréversible à des données biométriques selon un mode de réalisation de la présente invention.

Le dispositif de traitement 21 comprend en outre une unité de décision 23 adaptée pour décider si le second ensemble de données biométriques correspond au premier ensemble de données biométriques sur la base d'une comparaison entre le premier ensemble de données biométriques transformées et le second ensemble de données biométriques transformées. Cette unité de décision comprend des moyens adaptés pour effectuer la comparaison au niveau bit d'une représentation numérique desdits premier et second ensembles de données biométriques transformées en fonction d'un mot de code correcteur d'erreurs selon un mode de réalisation de la présente invention.

Ce dispositif de traitement comprend en outre un décodeur 27 qui permet de mettre en oeuvre un algorithme de décodage qui est associé au mot de code d'erreur. De ce fait, il permet de déterminer l'erreur correspondante. Sur la base de ces informations, l'unité de décision peut ainsi prendre une décision.

Ce dispositif de traitement de données biométriques peut comprendre en outre une unité de codage 24 adaptée pour fournir le premier ensemble de données biométriques transformées sous une forme codée en appliquant une opération de 'ou exclusif' entre le premier ensemble de données biométriques transformées et le mot de code correcteur d'erreurs. Dans ce cas, l'unité de décision est adaptée pour :

- appliquer une opération de 'ou exclusif' entre le second ensemble de données biométriques transformées et le premier ensemble de données biométriques transformées sous une forme codée ; et

- décider que le second ensemble de données biométriques correspond au premier ensemble de données biométriques de référence si le résultat obtenu à l'issue de l'étape /1/ est égal au résultat de l'opération de 'ou exclusif' appliquée entre le mot de code correcteur d'erreurs et une erreur lorsqu'un algorithme de décodage associé audit mot de code correcteur d'erreurs est adapté pour déterminer ladite erreur..

Ce dispositif de traitement de données biométriques peut aussi comprendre une base de données 26 dans laquelle est stocké le premier ensemble de données biométriques transformées sous une forme codée obtenue en appliquant une opération de 'ou exclusif' entre le premier ensemble de données biométriques transformées et le mot de code correcteur d'erreurs.

Cette base de données 26 peut aussi stocker le mot de code correcteur d'erreurs sous une forme hachée obtenue par application d'une fonction de hachage audit mot de code correcteur d'erreurs.

De plus, ce dispositif de traitement 21 peut comprendre une unité de génération 25 de mot de code correcteur d'erreurs de manière aléatoire.

**Revendications**

1. Procédé de traitement de données biométriques relatives à une partie biologique, ledit procédé comprenant les étapes suivantes :

    /a/ obtenir un premier ensemble de données biométriques transformées (f(B1)) par application d'au moins une transformation irréversible à un premier ensemble de données biométriques (B1) ;
    /b/ obtenir un second ensemble de données biométriques transformées (f(B2)) par application de ladite transformation à un second ensemble de données biométriques (B2) ;
    /c/ décider si le second ensemble de données biométriques correspond au premier ensemble de données biométriques sur la base d'une comparaison entre le premier ensemble de données biométriques transformées et le second ensemble de données biométriques transformées ;

    ledit procédé étant **caractérisé en ce que** ladite comparaison est effectuée sur la base d'une représentation numérique desdits premier et second ensembles de données biométriques transformées en fonction d'un mot de code correcteur d'erreurs et **en ce que**
    les premier et second ensembles de données biométriques correspondent à des données biométriques extraites à partir de données biométriques transformées obtenues par application d'une autre transformation irréversible sur des données biométriques captées sur la partie biologique.

2. Procédé de traitement de données biométriques selon la revendication 1, dans lequel on obtient le premier ensemble de données biométriques transformées sous une forme codée en appliquant une opération de 'ou exclusif' entre le premier ensemble de données biométriques transformées et le mot de code correcteur d'erreur ; et

dans lequel l'étape /c/ comprend les étapes suivantes :

    /1/ appliquer une opération de 'ou exclusif' entre le second ensemble de données biométriques transformées et le premier ensemble de données biométriques transformées sous une forme codée ; et
    /2/ décider que le second ensemble de données biométriques correspond au premier ensemble de données biométriques si le résultat obtenu à l'issue de l'étape /1/ est égal au résultat de l'opération de 'ou exclusif' appliquée entre le mot de code correcteur d'erreurs et une erreur lorsqu'un algorithme de décodage associé au mot de code correcteur d'erreurs est adapté pour déterminer ladite erreur.

3. Procédé de traitement de données biométriques selon la revendication 1 ou 2, dans lequel le premier ensemble de données biométriques transformées est stocké dans une base de données sous une forme codée obtenue en appliquant une opération de 'ou exclusif' entre le premier ensemble de données biométriques transformées et le mot de code correcteur d'erreurs.

4. Procédé de traitement de données biométriques selon la revendication 3, dans lequel le mot de code correcteur d'erreurs est stocké dans une base de données sous une forme hachée obtenue par application d'une fonction de hachage audit mot de code correcteur d'erreurs.

5. Procédé de traitement de données biométriques selon l'une quelconque des revendications précédentes, comprenant, avant l'étape /a/, une phase d'enrôlement au cours de laquelle, d'une part, le premier ensemble de données biométriques est capturé, et, d'autre part, le mot de code correcteur d'erreurs est généré de manière aléatoire.

6. Procédé de traitement de données selon l'une quelconque des revendications précédentes, dans lequel la transformation est irréversible parce qu'elle est secrète.

7. Procédé de traitement de données selon l'une quelconque des revendications précédentes, dans lequel les premier et second ensembles de données biométriques correspondent à des données biométriques captées sur la partie biologique.

8. Procédé de traitement de données selon l'une quelconque des revendications 1 à 6, dans lequel les premier et second ensembles de données biométriques correspondent à des données biométriques extraites à partir de données biométriques captées sur la partie biologique.

9. Système de traitement de données biométriques comprenant:

un dispositif de traitement (21) de données biométriques relatives à une partie biologique et au moins un capteur biométrique (20) adapté pour fournir un ensemble de données biométriques audit dispositif de traitement de données biométriques (21),
ledit dispositif comprenant :

- une unité d'obtention (22) adaptée pour obtenir un premier ensemble de données biométriques transformées (f(B1)) par application d'au moins une transformation irréversible à un premier ensemble de données biométriques (B1) et un second ensemble de données biométriques transformées (f(B2)) par application de ladite transformation à un second ensemble de données biométriques ;
- une unité de décision (23) adaptée pour décider si le second ensemble de données biométriques correspond au premier ensemble de données biométriques sur la base d'une comparaison entre le premier ensemble de données biométriques transformées et le second ensemble de données biométriques transformées ;

ledit système étant **caractérisé en ce que** ladite unité de décision comprend des moyens adaptés pour effectuer ladite comparaison au niveau bit d'une représentation numérique desdits premier et second ensembles de données biométriques transformées en fonction d'un mot de code correcteur d'erreurs ; et **en ce que** ledit système est adapté pour appliquer une transformation irréversible sur des données biométriques captées sur la partie biologique et pour extraire lesdits premier et second ensembles de données biométriques à partir desdites données biométriques ainsi transformées.

10. Système selon la revendication 9, le dispositif de traitement de données biométriques comprenant en outre une unité de codage (24) adaptée pour fournir le premier ensemble de données biométriques transformées sous une forme codée en appliquant une opération de 'ou exclusif entre le premier ensemble de données biométriques transformées et le mot de code correcteur d'erreurs ;
et dans lequel l'unité de décision est adaptée pour :

- appliquer une opération de 'ou exclusif entre le second ensemble de données biométriques transformées et le premier ensemble de données biométriques transformées sous une forme codée ; et
- décider que le second ensemble de données biométriques correspond au premier ensemble de données biométriques de référence si le résultat obtenu à l'issue de l'étape /1/ est égal au résultat de l'opération de 'ou exclusif appliquée entre le mot de code correcteur d'erreurs et une erreur lorsqu'un algorithme de décodage associé audit mot de code correcteur d'erreurs est adapté pour déterminer ladite erreur.

11. Système selon la revendication 9 ou 10, le dispositif de traitement de données biométriques comprenant en outre une base de données (26) dans laquelle est stocké le premier ensemble de données biométriques transformées sous une forme codée obtenue en appliquant une opération de 'ou exclusif entre le premier ensemble de données biométriques transformées et le mot de code correcteur d'erreurs.

12. Système selon la revendication 11, dans lequel la base de données (26) stocke le mot de code correcteur d'erreurs sous une forme hachée obtenue par application d'une fonction de hachage audit mot de code correcteur d'erreurs.

13. Système selon l'une quelconque des revendications 9 à 12, le dispositif de traitement de données biométriques comprenant en outre une unité de génération (25) de mot de code correcteur d'erreurs de manière aléatoire.

**Patentansprüche**

1. Verfahren zur Verarbeitung biometrischer Daten bezüglich eines biologischen Teils, wobei das Verfahren die folgenden Schritte enthält:

/a/ Erhalt einer ersten Einheit transformierter biometrischer Daten (f(B1)) durch Anwendung mindestens einer irreversiblen Transformation auf eine erste Einheit biometrischer Daten (B1);
/b/ Erhalt einer zweiten Einheit transformierter biometrischer Daten (f(B2)) durch Anwendung der Transformation auf eine zweite Einheit biometrischer Daten (B2);
/c/ Entscheiden, ob die zweite Einheit biometrischer Daten der ersten Einheit biometrischer Daten entspricht, auf der Basis eines Vergleichs zwischen der ersten Einheit transformierter biometrischer Daten und der zweiten Einheit transformierter biometrischer Daten;

wobei das Verfahren **dadurch gekennzeichnet ist, dass**

der Vergleich auf der Basis einer numerischen Darstellung der ersten und zweiten Einheiten transformierter biometrischer Daten abhängig von einem Fehlerkorrekturcodewort durchgeführt wird, und dass die erste Einheit und die zweite Einheit biometrischer Daten biometrischen Daten entsprechen, die ausgehend von transformierten biometrischen Daten extrahiert werden, die durch Anwendung einer weiteren irreversiblen Transformation auf biometrische Daten erhalten werden, die auf dem biologischen Teil aufgenommen werden.

2. Verfahren zur Verarbeitung biometrischer Daten nach Anspruch 1, wobei die erste Einheit transformierter biometrischer Daten in einer codierten Form erhalten wird, indem eine "Exklusiv-Oder"-Verknüpfung zwischen der ersten Einheit transformierter biometrischer Daten und dem Fehlerkorrekturcodewort angewendet wird; und wobei der Schritt /c/ die folgenden Schritte enthält:

/1/ Anwenden einer "Exklusiv-Oder"-Verknüpfung zwischen der zweiten Einheit transformierter biometrischer Daten und der ersten Einheit transformierter biometrischer Daten in einer codierten Form; und

/2/ Entscheiden, dass die zweite Einheit biometrischer Daten der ersten Einheit biometrischer Daten entspricht, wenn das nach dem Schritt /1/ erhaltene Ergebnis gleich dem Ergebnis der "Exklusiv-Oder"-Verknüpfung ist, die zwischen dem Fehlerkorrekturcodewort und einem Fehler angewendet wird, wenn ein dem Fehlerkorrekturcodewort zugeordneter Decodieralgorithmus geeignet ist, um den Fehler zu bestimmen.

3. Verfahren zur Verarbeitung biometrischer Daten nach Anspruch 1 oder 2, wobei die erste Einheit transformierter biometrischer Daten in einer Datenbank in einer codierten Form gespeichert wird, die durch Anwendung einer "Exklusiv-Oder"-Verknüpfung zwischen der ersten Einheit transformierter biometrischer Daten und dem Fehlerkorrekturcodewort erhalten wird.

4. Verfahren zur Verarbeitung biometrischer Daten nach Anspruch 3, wobei das Fehlerkorrekturcodewort in einer Datenbank in einer gehashten Form gespeichert wird, die durch Anwendung einer Hashfunktion auf das Fehlerkorrekturcodewort erhalten wird.

5. Verfahren zur Verarbeitung biometrischer Daten nach einem der vorhergehenden Ansprüche, das vor dem Schritt /a/ eine Einlernphase enthält, während der einerseits die erste Einheit biometrischer Daten erfasst und andererseits das Fehlerkorrekturcodewort zufällig generiert wird.

6. Verfahren zur Verarbeitung biometrischer Daten nach einem der vorhergehenden Ansprüche, wobei die Transformation irreversibel ist, da sie geheim ist.

7. Verfahren zur Verarbeitung biometrischer Daten nach einem der vorhergehenden Ansprüche, wobei die erste Einheit und die zweite Einheit biometrischer Daten biometrischen Daten entsprechen, die auf dem biologischen Teil aufgenommen wurden.

8. Verfahren zur Verarbeitung biometrischer Daten nach einem der Ansprüche 1 bis 6, wobei die ersten und zweiten Einheiten biometrischer Daten biometrischen Daten entsprechen, die ausgehend von biometrischen Daten extrahiert werden, die auf dem biologischen Teil aufgefangen wurden.

9. System zur Verarbeitung biometrischer Daten, das enthält:

eine Vorrichtung (21) zur Verarbeitung biometrischer Daten bezüglich eines biologischen Teils, und mindestens einen biometrischen Sensor (20), der geeignet ist, um eine Einheit biometrischer Daten an die Verarbeitungsvorrichtung biometrischer Daten (21) zu liefern, wobei die Vorrichtung enthält:

- eine Erhalteinheit (22), die geeignet ist, um eine erste Einheit transformierter biometrischer Daten (f(B1)) durch Anwendung mindestens einer irreversiblen Transformation auf eine erste Einheit biometrischer Daten (B1) und eine zweite Einheit transformierter biometrischer Daten (f(B2)) durch Anwendung der Transformation auf eine zweite Einheit biometrischer Daten zu erhalten;
- eine Entscheidungseinheit (23), die geeignet ist, um zu entscheiden, ob die zweite Einheit biometrischer Daten der ersten Einheit biometrischer Daten entspricht, auf der Basis eines Vergleichs zwischen der ersten Einheit transformierter biometrischer Daten und der zweiten Einheit transformierter biometrischer Daten;

wobei das System **dadurch gekennzeichnet ist, dass** die Entscheidungseinheit Mittel enthält, die geeignet sind, um den Vergleich auf dem Bitpegel einer numerischen Darstellung der ersten und zweiten Einheit transformierter biometrischer Daten abhängig von einem Fehlerkorrekturcodewort durchzuführen; und dass das System geeignet ist, um eine irreversible Transformation auf biometrische Daten anzuwenden, die auf dem biologischen Teil aufgenommen wurden, und um die erste Einheit und die zweite Einheit biometrischer Daten ausgehend von den so transformierten biometrischen Daten zu extrahieren.

10. System nach Anspruch 9, wobei die Vorrichtung zur Verarbeitung biometrischer Daten außerdem eine Codiereinheit (24) enthält, die geeignet ist, die erste Einheit transformierter biometrischer Daten in einer codierten Form zu liefern, indem eine "Exklusiv-Oder"-Verknüpfung zwischen der ersten Einheit transformierter biometrischer Daten und dem Fehlerkorrekturcodewort angewendet wird; und wobei die Entscheidungseinheit geeignet ist:

- eine "Exklusiv-Oder"-Verknüpfung zwischen der zweiten Einheit transformierter biometrischer Daten und der ersten Einheit transformierter biometrischer Daten in codierter Form anzuwenden; und
- zu entscheiden, dass die zweite Einheit biometrischer Daten der ersten Einheit biometrischer Bezugsdaten entspricht, wenn das am Ende des Schritts /1/ erhaltene Ergebnis gleich dem Ergebnis der "Exklusiv-Oder"-Verknüpfung ist, die zwischen dem Fehlerkorrekturcodewort und einem Fehler angewendet wird, wenn ein dem Fehlerkorrekturcodewort zugeordneter Decodieralgorithmus geeignet ist, den Fehler zu bestimmen.

11. System nach Anspruch 9 oder 10, wobei die Vorrichtung zur Verarbeitung biometrischer Daten außerdem eine Datenbank (26) enthält, in der die erste Einheit transformierter biometrischer Daten in einer codierten Form gespeichert ist, die erhalten wird, indem eine "Exklusiv-Oder"-Verknüpfung zwischen der ersten Einheit transformierter biometrischer Daten und dem Fehlerkorrekturcodewort angewendet wird.

12. System nach Anspruch 11, wobei die Datenbank (26) das Fehlerkorrekturcodewort in einer gehashten Form speichert, die durch Anwendung einer Hashfunktion auf das Fehlerkorrekturcodewort erhalten wird.

13. System nach einem der Ansprüche 9 bis 12, wobei die Vorrichtung zur Verarbeitung biometrischer Daten außerdem eine Einheit (25) zur zufälligen Generierung eines Fehlerkorrekturcodeworts enthält.

**Claims**

1. Method of processing biometric data relating to a biological part, said method including the following stages:

/a/ obtaining a first set of transformed biometric data (f(B1)) by applying at least one irreversible transformation to a first set of biometric data (B1);
/b/ obtaining a second set of transformed biometric data (f(B2)) by applying said transformation to a second set of biometric data (B2);
/c/ deciding whether the second biometric data set corresponds to the first biometric data set on the basis of a comparison between the first transformed biometric data set and the second transformed biometric data set;

the method being **characterized in that** said comparison is performed on the basis of a digital representation of said first and second transformed biometric data sets as a function of an error-correcting code word and **in that** the first and second biometric data sets correspond to biometric data extracted from transformed biometric data obtained by applying another irreversible transformation to biometric data collected from the biological part.

2. Biometric data processing method as claimed in claim 1, wherein the first transformed biometric data set in an encoded form is obtained by applying an "exclusive OR" operation between the first transformed biometric data set and the error-correcting code word; and wherein the stage /c/ includes the following stages:

/1/ applying an "exclusive OR" operation between the second transformed biometric data set and the first transformed biometric data set in an encoded form; and
/2/ deciding that the second biometric data set corresponds to the first biometric data set if the result obtained at the end of stage /1/ is equal to the result of the "exclusive OR" operation applied between the error-correcting code word and an error when a decoding algorithm associated with said error-correcting code word is adapted to determine said error.

3. Biometric data processing method as claimed in claim 1 or 2, wherein the first transformed biometric data set is stored in a database in an encoded form obtained by applying an "exclusive OR" operation between the first transformed biometric data set and the error-correcting code word.

4. Biometric data processing method as claimed in claim 3, wherein the error-correcting code word is stored in a database in a hashed form obtained by applying a hash function to said error-correcting code word.

5. Biometric data processing method as claimed in any one of the previous claims, including, prior to the stage /a/, an enrolment phase during which, on the one hand, the first biometric data set is captured, and, on the other hand, the error-correcting code word is generated randomly.

6. Data processing method as claimed in any one of the previous claims, wherein the transformation is irreversible because it is secret.

7. Data processing method as claimed in any one of the previous claims, wherein the first and second biometric data sets correspond to biometric data collected from the biological part.

8. Data processing method as claimed in any one of claims 1 to 6, wherein the first and second biometric data sets correspond to biometric data extracted from biometric data collected from the biological part.

9. System for processing biometric data comprising:

    a device for the processing (21) of biometric data relating to a biological part and
    at least one biometric sensor (20) adapted to provide said biometric data processing device with a biometric data set,
    said device including:

        - an obtaining unit (22) adapted to obtain a first transformed biometric data set (f(B1)) by applying at least one irreversible transformation to a first biometric data set (B1) and a second transformed biometric data set (f(B2)) by applying said transformation to a second biometric data set;
        - a decision-making unit (23) adapted to decide whether the second biometric data set corresponds to the first biometric data set on the basis of a comparison between the first transformed biometric data set and the second transformed biometric data set;

    the system being **characterized in that** said decision-making unit comprises means adapted to perform said comparison at the bit level of a digital representation of said first and second transformed biometric data sets as a function of an error-correcting code word and **in that** said system is adapted to apply an irreversible transformation to biometric data collected from the biological part and to extract said first and second biometric data sets from said transformed biometric data.

10. System according to claim 9, the biometric data processing device further including an encoding unit (24) adapted to provide the first transformed biometric data set in an encoded form by applying an "exclusive OR" operation between the first transformed biometric data set and the error-correcting code word;
and wherein the decision-making unit is adapted to:

    - apply an "exclusive OR" operation between the second transformed biometric data set and the first transformed biometric data set in an encoded form; and
    - decide that the second biometric data set corresponds to the first reference biometric data set if the result obtained at the end of stage /1/ is equal to the result of the "exclusive OR" operation applied between the error-correcting code word and an error when a decoding algorithm associated with said error-correcting code word is adapted to determine said error.

11. System according to claim 9 or 10, the biometric data processing device further including a database (26) wherein is stored the first transformed biometric data set in an encoded form obtained by applying an "exclusive OR" operation between the first transformed biometric data set and the error-correcting code word.

12. System according to claim 11, wherein the database (26) stores the error-correcting code word in a hashed form obtained by applying a hash function to said error-correcting code word.

13. System according to any one of claims 9 to 12, the biometric data processing device further including a unit (25) for random error-correcting code word generation.

DISPOSER D'UN PREMIER ENSEMBLE
DE DONNÉES BIOMÉTRIQUES B1
TRANSFORMÉES f(B1)
⎯11

OBTENIR UN SECOND ENSEMBLE
DE DONNÉES BIOMÉTRIQUES B2
TRANSFORMÉES f(B2)
⎯12

DÉCIDER SI LE PREMIER ENSEMBLE
DE DONNÉES BIOMÉTRIQUES
CORRESPOND AU SECOND ENSEMBLE
DE DONNÉES BIOMÉTRIQUES
SUR LA BASE D'UN CODE
CORRECTEUR D'ERREURS
⎯13

# FIG. 1

20

FIG. 2

21

23

OBTENTION
FORME
TRANSFORMÉE
f

22

DÉCISION

25

CODAGE

24

GEN

27

26

DÉCODAGE

## RÉFÉRENCES CITÉES DANS LA DESCRIPTION

**Documents brevets cités dans la description**

- US 6836554 B
- WO 2007029529 A1

**Littérature non-brevet citée dans la description**

- **THADDEUS BEIER ; SHAWN NEELY.** Feature-based image metamorphosis. *SIGGRAPH '92: Proceedings of the 19th annual conference on Computer graphics and interactive techniques,* 1992
- **RUSSELL ANG ; REIHANEH SAFAVI-NAINI ; LUKE MCAVEN.** Cancelable Key-Based Fingerprint Templates. *ACISP,* 2005
- **JUELS ; WATTENBERG.** *A Fuzzy Commitment Scheme,* 1999